# EUROPÄISCHE PATENTSCHRIFT

(11) **EP 2 276 664 B1**
(45) Veröffentlichungstag und Bekanntmachung des Hinweises auf die Patenterteilung: **10.07.2013**
(21) Anmeldenummer: 09745584.4
(22) Anmeldetag: 15.05.2009
(51) Int. Cl.: B64C 13/42

(54) **STELLSYSTEM FÜR EINE HYDRAULISCH BETÄTIGBARE HÖHENFLOSSE UND TESTVERFAHREN ZUR ÜBERPRÜFUNG DER INTEGRITÄT EINES STELLSYSTEMS**
CONTROL SYSTEM FOR A HYDRAULICALLY ACTUATABLE HORIZONTAL STABILIZER AND TEST METHOD FOR TESTING THE INTEGRITY OF A CONTROL SYSTEM
SYSTEME DE REGLAGE POUR UN EMPENNAGE HORIZONTAL A COMMANDE HYDRAULIQUE ET PROCEDE DE TEST PERMETTANT DE CONTROLER L'INTEGRITE D'UN SYSTEME DE REGLAGE

(30) Priorität: 15.05.2008 US 53297; 15.05.2008 DE 102008023628
(43) Veröffentlichungstag der Anmeldung: 26.01.2011
(73) Patentinhaber: Airbus Operations GmbH, 21129 Hamburg (DE)
(72) Erfinder: RECKSIEK, Martin, 21077 Hamburg (DE); EPPLE, Thomas, 88167 Röthenbach (DE)
(74) Vertreter: Schatt, Markus F.
(86) Internationale Anmeldenummer: PCT/EP2009/003509
(87) Internationale Veröffentlichungsnummer: WO 2009/138251

(56) Entgegenhaltungen:
- EP-A- 1 061 269
- EP-A- 1 721 825
- EP-A- 1 878 658
- DE-A1-102005 042 511
- US-A1- 2002 121 086

## Beschreibung

Die Erfindung betrifft ein Stellsystem für eine hydraulisch betätigbare Höhenflosse sowie ein Testverfahren zur Überprüfung der Integrität eines Stellsystems.

Üblicherweise werden in ihrer Neigung gegenüber der Längsausrichtung eines Flugzeugrumpfs veränderliche Flugzeug-Höhenflossen unter Verwendung von Trapezgewinde-Spindeln oder Kugelumlaufspindeln getrimmt, d.h. in ihrer Neigung gegenüber dem Flugzeugrumpf verändert. Da an derartige Trimm-Aktuatoren sehr hohe Anforderungen bezüglich ihrer Zuverlässigkeit bzw. Ausfallwahrscheinlichkeit gestellt werden, müssen in aller Regel zwei Lastpfade zur Verfügung gestellt werden, was durch eine Spindel mit internem, zweiten Lastpfad und doppelter Strukturanbindung realisiert worden ist. Allerdings führt dies zu einer mechanisch relativ aufwendigen Konstruktion. Höhenflossen-Stellsysteme mit Trimmspindeln mit internem zweiten Lastpfad sind hinsichtlich ihrer strukturellen Integrität nicht automatisch vollständig überwachbar. Weiterhin weisen derartige Stellsysteme durch ihren Strukturanschluss ein Lagerspiel auf, welches zu unerwünschten aeroelastischen Effekten und Beeinträchtigung des Passagierkomfort führen kann.

Generell verursachen Stellsysteme mit Spindeln einen relativ großen Wartungsaufwand auf und bergen die Gefahr einer mechanischen Blockade des Stellsystems.

Die DE 10 2005 042 511 A1 offenbart ein Betätigungssystem für einen Trimm-Aktuator, das einen hydraulischen Linearaktuator, eine Verriegelungsvorrichtung zum Arretieren des Aktuators und zwei Hydrauliksysteme zur Betätigung des Trimm-Aktuators aufweist.

Die EP 1 721 825 A1, die als nächstliegender Stard der Technik angesehen wird, beschreibt ein Aktuierungssystem für eine Steuerklappe eines Flugzeugs. Das Aktuierungssystem weist zwei Aktuatorvorrichtungen auf. Eine der Aktuatorvorrichtungen ist durch einen elektro-mechanischen Aktuator realisiert, der mittels einer Verriegelungsvorrichtung blockiert werden kann.

Aus der DE 10 2004 047008 A1 ist eine Antriebslösung mit zwei parallelen, mechanisch synchronisierten Spindel bekannt.

In der DE 10 2005 042 511 A1 ist ein hydraulischer Simplex-Höhenflossenantrieb mit redundanter Energieversorgung mit mechanischer Verriegelung beschrieben. Mit diesen Antriebskonzept ist ein hohes Maß an Fehlertoleranz und ein Erreichen hoher Verfügbarkeitsanforderungen nur sehr bedingt oder gar nicht erreichbar. Aufgrund des einfachen Strukturanschlusses hat dieser Antrieb auch ein Lagerspiel.

Aufgabe der Erfindung ist ein Stellsystem für eine hydraulisch betätigbare Höhenflosse eines Flugzeugs bereitzustellen, das möglichst gut hinsichtlich seiner Integrität überwachbar, fehlertolerant und in seinem Aufbau einfach gestaltet ist.

Eine weitere Aufgabe der Erfindung ist ein Stellsystem für eine hydraulisch betätigbare Höhenflosse eines Flugzeugs bereitzustellen, bei dem möglichst kein Lagerspiel auftritt.

Diese Aufgaben werden mit den Merkmalen der unabhängigen Patentansprüche 1 und 11 gelöst. Weitere Ausführungsformen sind in den auf diese rückbezogenen Unteransprüchen angegeben.

Erfindungsgemäß ist ein Stellsystem für eine hydraulisch betätigbare Höhenflosse eines Flugzeugs vorgesehen, aufweisend:
■ zwei von zumindest einem Hydraulik-Versorgungssystem versorgte Aktuatoren, von denen jeder an ein tragendes Struktur-Bauteil und an eine gegenüber dem tragenden Struktur-Bauteil verstellbare Höhenflosse zur Betätigung derselben gekoppelt ist,
■ eine zur Steuerung des ersten Aktuators an diesen hydraulisch angeschlossene erste Steuerventil-Vorrichtung und eine zur Steuerung des zweiten Aktuators an diesen hydraulisch angeschlossene zweite Steuerventil-Vorrichtung, die jeweils von einem Hydraulik-System versorgt werden,

■ eine mit den Steuerventil-Vorrichtungen funktional verbundene Steuerungs- und Überwachungsvorrichtung, die entsprechende Kommandosignale für die Steuerventil-Vorrichtungen ermittelt und an diese zur Ausführung entsprechender Steuerbewegungen zur Betätigung der Aktuatoren sendet,
■ eine an den ersten Aktuator gekoppelte Verriegelungs-Vorrichtung mit einer Verriegelungs-Mechanik zur Fixierung der Ausfahrstellung der Schubstange des ersten Aktuators in ihrem verriegeltem Zustand, die hydraulisch mit dem ersten Hydraulik-System und mit dem zweiten Hydraulik-System über eine hydraulische Oder-Schaltung derart in Verbindung steht, dass im normalen Betrieb zumindest eines der Hydraulik-Systeme die Verriegelungs-Mechanik in ihrem entriegeltem Zustand ist und die Verriegelungsmechanik bei dem Abfall beider Hydraulik-Systeme unter einem Mindestdruck die Ausfahrstellung der Schubstange des ersten Aktuators fixiert.

Das Stellsystem kann weiterhin aufweisen: mit der Steuerungs- und Überwachungsvorrichtung funktional in Verbindung stehende Zustands-Sensoren zur Bestimmung des Verstellzustands von Strukturanschlüssen der Aktuatoren an der Höhenflosse oder von Bereichen, die an den Strukturanschlüssen gelegen sind. Dabei weist die an den ersten Aktuator gekoppelte Verriegelungs-Vorrichtung weiterhin eine Verriegelungs-Aktivierungsvorrichtung auf, die funktional mit der Steuerungs- und Überwachungsvorrichtung in Verbindung steht und die eine Verriegelungs-Aktivierungsvorrichtung aufweist, die auf den Empfang eines Aktivierungssignals die Verriegelungsmechanik aktiviert. Weiterhin kann in dieser Ausgestaltung die Steuerungs- und Überwachungsvorrichtung eine Rekonfigurations-Funktion aufweisen, die aufgrund der Erkennung eines Fehlerzustands im Stellsystem ein Aktivierungssignal an die Verriegelungs-Aktivierungsvorrichtung zur Fixierung der Ausfahrstellung der Schubstange des ersten Aktuators sendet, wenn die erfassten Verstellzustände an beiden Strukturanschlüssen über ein vorbestimmtes Maß von den jeweiligen Soll-Kommandos der Steuerungs- und Überwachungsvorrichtung abweicht. Bei einer weiteren Ausführungsform des erfindungsgemäßen Stellsystems kann vorgesehen sein, dass die Steuerungs- und Überwachungsvorrichtung zur Erkennung eines Fehlerzustands im Stellsystem eine Rekonfigurations-Funktion aufweist, die eine Vergleichsfunktion aufweist, mit der Soll-Kommandos der Steuerungs- und Überwachungsvorrichtung mit den von den Zustands-Sensoren erfassten Verstellzuständen an beiden Strukturanschlüssen der Aktuatoren verglichen werden, und die ein Aktivierungssignal an die Verriegelungs-Aktivierungsvorrichtung zur Fixierung der Ausfahrstellung der Schubstange des ersten Aktuators sendet, wenn die erfassten Verstellzustände an beiden Strukturanschlüssen über ein vorbestimmtes Maß von den jeweiligen Soll-Kommandos der Steuerungs- und Überwachungsvorrichtung abweicht.

Bei diesen Ausführungsbeispielen des erfindungsgemäßen Stellsystems kann weiterhin vorgesehen sein, dass die Steuerungs- und Überwachungsvorrichtung zur Fixierung der Ausfahrstellung der Schubstange des ersten Aktuators das Aktivierungssignal an die erste Steuerventil-Vorrichtung sendet, die ein Aktivierungssignal an die Verriegelungs-Aktivierungsvorrichtung sendet.

Ein weiteres Ausführungsbeispiel des erfindungsgemäßen Stellsystems kann die Steuerungs- und Überwachungsvorrichtung derart vorsehen, dass in dem Fall, in dem die an einem der beiden Strukturanschlüsse erfassten Verstellzustände ein vorbestimmtes Maß von den jeweiligen Soll-Kommandos der Steuerungs- und Überwachungsvorrichtung für die jeweils zugeordnete Steuerventil-Vorrichtung abweicht, die Steuerungs- und Überwachungsvorrichtung die jeweils zugeordnete Steuerventil-Vorrichtung auf Durchfluss schaltet, so dass der jeweils zugeordnete Aktuator von dem jeweils anderen Aktuator mitgeführt wird.

Die Zustands-Sensoren können in den genannten Ausführungsbeispielen zur Bestimmung des Verstellzustands von Aktuatoren oder Strukturanschlüssen der Aktuatoren jeweils an den Aktuatoren angeordnet und derart gestaltet sein, dass diese eine Ausfahrstellung der Schubstangen erfassen. Alternativ oder zusätzlich können die Zustands-Sensoren in den genannten Ausführungsbeispielen zur Bestimmung des Verstellzustands von Aktuatoren oder Strukturanschlüssen der Aktuatoren jeweils an den Strukturanschlüssen der Aktuatoren angeordnet sein und eine Ausfahrstellung von deren Anschlussbereichen an der Höhenflosse erfassen. Generell können die Zustands-Sensoren zur Bestimmung des Verstellzustands von Strukturanschlüssen der Aktuatoren und/oder der Aktuatoren geeignet und eingeerichtet sein, dass diese zusätzlich die Stell-Geschwindigkeit und/oder die Stell-Beschleunigung der Schubstangen erfassen.

Bei diesen Ausführungsbeispielen des erfindungsgemäßen Stellsystems kann jede der Steuerventil-Vorrichtungen an jeweils ein Hydraulik-Versorgungssystem angeschlossen sein und die Steuerungs- und Überwachungsvorrichtung derart gestaltet sein, dass in dem Fall, dass einem der Hydraulik-Versorgungssysteme ein Fehlerzustand zugeordnet worden ist, die Steuerungs- und Überwachungsvorrichtung die jeweils zugeordnete Steuerventil-Vorrichtung auf Durchfluss schaltet, so dass der jeweils zugeordnete Aktuator von dem jeweils anderen Aktuator mitgeführt wird. Bei diesem Ausführungsbeispiel kann die Steuerungs- und Überwachungsvorrichtung derart gestaltet sein, dass in dem Fall, dass beiden der Hydraulik-Versorgungssysteme ein Fehlerzustand zugeordnet worden ist, die Steuerungs- und Überwachungsvorrichtung ein Aktivierungssignal an die Verriegelungs-Aktivierungsvorrichtung sendet.

Erfindungsgemäß kann weiterhin ein Stellsystem für eine hydraulisch betätigbare Höhenflosse eines Flugzeugs vorgesehen sein, das aufweist:
■ zwei Aktuatoren, von denen jeder ein tragendes Struktur-Bauteil und eine gegenüber dem tragenden Struktur-Bauteil verstellbare Höhenflosse zur Betätigung derselben gekoppelt ist,
■ eine zur Steuerung des ersten Aktuators an diesen hydraulisch angeschlossene erste Steuerventil-Vorrichtung, die von einem ersten Hydraulik-System versorgt wird, und eine zur Steuerung des zweiten Aktuators an diesen hydraulisch angeschlossene zweite Steuerventil-Vorrichtung, die von einem zweiten Hydraulik-System versorgt wird,
■ eine mit den Steuerventil-Vorrichtungen funktional verbundene Steuerungs- und Überwachungsvorrichtung, die entsprechende Kommandosignale für die Steuerventil-Vorrichtungen ermitteln und an diese zur Ausführung entsprechender Steuerbewegungen zur Betätigung der Aktuatoren senden kann, wobei im Normalbetrieb die Steuerungs- und Überwachungsvorrichtung zur Betätigung der Aktuatoren und somit der Höhenflosse in dem jeweils aktuellen Zeitintervall nur die erste von beiden Steuerventil-Vorrichtungen ansteuert und die jeweils andere der Steuerventil-Vorrichtungen auf Durchfluss schaltet, wobei die Steuerungs- und Überwachungsvorrichtung eine Rekonfigurations-Funktion aufweist, die die zweite von beiden Steuerventil-Vorrichtungen ansteuert und die erste der Steuerventil-Vorrichtungen auf Durchfluss schaltet, wenn die Steuerungs- und Überwachungsvorrichtung der ersten Steuerventil-Vorrichtung und/oder dem ersten Aktuator und/oder dem ersten Hydraulik-System einen Fehlerzustand zuordnet.

Bei diesem Ausführungsbeispiel des erfindungsgemäßen Stellsystems mit einer in einem Zeitintervall jeweils aktiven und einer passiven Steuerventil-Vorrichtung können sinngemäß auch die Merkmale des zuvor beschriebenen Stellsystems und seinen Ausführungsbeispielen vorgesehen sein.

Insbesondere ist bei diesem Stellsystem nach der Erfindung vorgesehen, dass eine an den ersten Aktuator gekoppelte Verriegelungs-Vorrichtung mit einer Verriegelungs-Mechanik zur Fixierung der Ausfahrstellung der Schubstange des ersten Aktuators in ihrem verriegeltem Zustand vorgesehen ist, die hydraulisch mit dem ersten Hydraulik-System und mit dem zweiten Hydraulik-System über eine hydraulische Oder-Schaltung derart in Verbindung steht, dass im normalen Betrieb zumindest eines der Hydraulik-Systeme die Verriegelungs-Mechanik in ihrem entriegeltem Zustand ist und die Verriegelungsmechanik bei dem Abfall beider Hydraulik-Systeme unter einem Mindestdruck die Ausfahrstellung der Schubstange des ersten Aktuators fixiert.

Weiterhin kann bei dem Ausführungsbeispiel des erfindungsgemäßen Stellsystems mit einer in einem Zeitintervall jeweils aktiven und einer passiven Steuerventil-Vorrichtung vorgesehen sein, dass
■ dass die Steuerungs- und Überwachungsvorrichtung funktional in Verbindung steht mit Zustands-Sensoren zur Bestimmung des Verstellzustands von Strukturanschlüssen der Aktuatoren an der Höhenflosse oder von Bereichen, die an den Strukturanschlüssen gelegen sind, und
■ dass die Verriegelungs-Vorrichtung eine Verriegelungs-Aktivierungsvorrichtung aufweist, die funktional mit der Steuerungs- und Überwachungsvorrichtung in Verbindung steht und die auf den Empfang eines Aktivierungssignals die Verriegelungsmechanik aktiviert.

Dabei kann weiterhin vorgesehen sein, dass die Steuerungs- und Überwachungsvorrichtung eine Rekonfigurations-Funktion aufweist, die aufgrund der Erkennung eines Fehlerzustands im Stellsystem ein Aktivierungssignal an die Verriegelungs-Aktivierungsvorrichtung zur Fixierung der Ausfahrstellung der Schubstange des jeweils aktiven Aktuators sendet, wenn die erfassten Verstellzustände an beiden Strukturanschlüssen über ein vorbestimmtes Maß von den jeweiligen Soll-Kommandos der Steuerungs- und Überwachungsvorrichtung abweicht.

Weiterhin ist nach der Erfindung ein Testverfahren zur Überprüfung der Integrität eines Stellsystems zur Betätigung einer Höhenflosse eines Flugzeugs mit zwei Aktuatoren vorgesehen. Das Stellsystem ist dabei nach einem erfindungsgemäßen Ausführungsbeispiel gestaltet und weist insbesondere auf: zwei Steuerventil-Vorrichtungen zur Anssteuerung der aktuatoren, eine mit den Steuerventil-Vorrichtungen funktional verbundene Steuerungs- und Überwachungsvorrichtung, die entsprechende Kommandosignale für die Steuerventil-Vorrichtungen ermittelt und an diese zur Ausführung entsprechender Steuerbewegungen zur Betätigung der Aktuatoren sendet, und eine an den ersten Aktuator gekoppelte Verriegelungs-Vorrichtung mit einer Verriegelungs-Mechanik zur Fixierung der Ausfahrstellung der Schubstange des ersten Aktuators in ihrem verriegeltem Zustand. Bei dem Testverfahren sind die folgenden Schritte vorgesehen:
■ Aufnahme der Messwerte der Zustands-Sensoren zur Erfassung einer ersten Verstellposition der Höhenflosse,
■ Aktivierung der Verriegelungs-Vorrichtung zur Blockierung des ersten Aktuators,
■ Betätigung des zweiten Aktuators in zumindest eine vorgegebene Richtung,
■ nach der Betätigung des zweiten Aktuators Aufnahme der Messwerte der Zustands-Sensoren zur Erfassung einer zweiten Verstellposition und
■ Vergleich der ersten Verstellposition mit den zweiten Verstellposition und Erzeugung eines Fehlersignals, wenn die Differenz zwischen der ersten Verstellposition mit den zweiten Verstellposition einen vorgegebenen Grenzwert überschreiten.

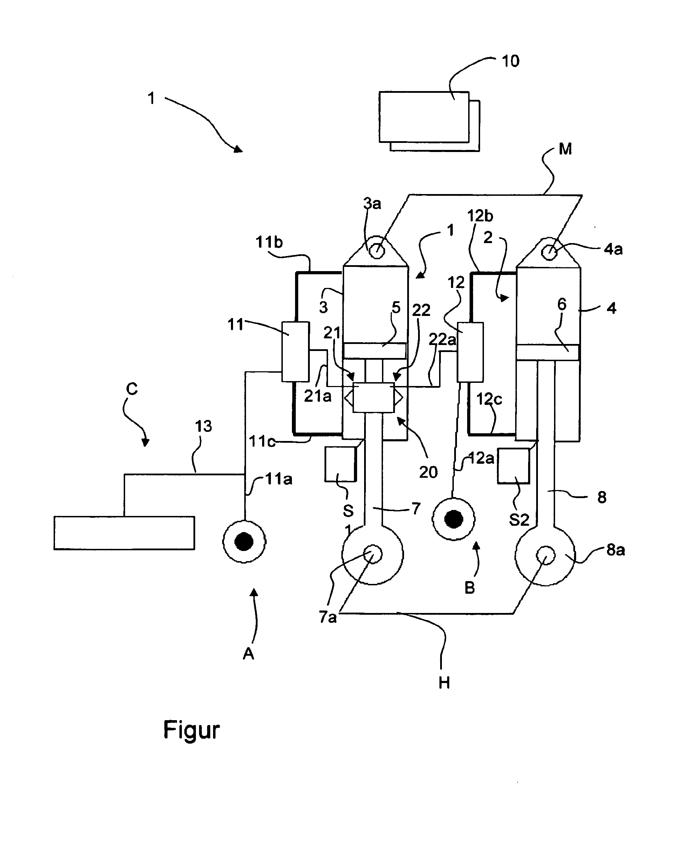

Im Folgenden werden Ausführungsbeispiele der Erfindung an Hand der beigefügten Figur beschrieben, die eine funktionale Darstellung einer Ausführungsform des erfindungsgemäßen Stellsystem für eine hydraulisch betätigbare Höhenflosse zeigt.

Das erfindungsgemäße System weist einen ersten Aktuator 1 und einen zweiten Aktuator 2 auf, die jeweils von einem Hydrauliksystem versorgt werden. Die Aktuatoren 1, 2 weisen einen Stell-Zylinder oder Zylinder oder Gehäuse 3 bzw. 4 mit einem ersten mechanischen Strukturanschluss 3a bzw. 4a auf, über den die Aktuatoren 1, 2 an einem an einem tragenden Struktur-Bauteil M (schematisch gezeigt) angeschlossen ist. Die Aktuatoren 1, 2 weisen weiterhin einen in diesen bewegbaren Kolben 5 bzw. 6 auf, an dem eine Schubstange 7 bzw. 8 mit einem zweiten Strukturanschluss 7a bzw. 8a befestigt ist. Die Schubstangen 7 bzw. 8 sind zur Ausbildung einer Schubstangen-Anschlussmechanik über den zweiten Strukturanschluss 7a bzw. 8a jeweils an der gegenüber dem tragenden Struktur-Bauteil verstellbaren Höhenflosse H (schematisch gezeigt) angeschlossen, so dass durch die Bewegung des Kolbens 3a bzw. 4a die Höhenflosse betätigt wird.

Die Aktuatoren 1, 2 werden von jeweils einer Steuerventil-Vorrichtung 11, 12 mit einem Steuerventil oder Steuerventil und einer Steuerfunktion hydraulisch gesteuert, von denen jedes über eine funktionale Verbindungsleitung (nicht gezeigt) funktional mit einer Steuerungs- und Überwachungsvorrichtung 10 verbunden ist. Die funktionale Verbindungsleitung zwischen den Steuerventil-Vorrichtungen 11, 12 und der Steuerungs- und Überwachungsvorrichtung 10 kann eine Signal- oder Busverbindung sein. Jede Steuerventil-Vorrichtung 11, 12 setzt die von der Steuerungs- und Überwachungsvorrichtung 10 empfangenen Kommandosignale in Steuerbewegungen um, durch die der Hydraulik-Zufluss und Hydraulik-Abfluss und somit die Bewegung des Kolbens 3a, 3b in dem jeweils zugeordneten Aktuator 1, 2 zur Betätigung der Höhenflosse gesteuert wird. Die funktionale Verbindung zwischen den Steuerventilen und der Steuerungs- und Überwachungsvorrichtung 10 ist in der Figur nicht gezeigt.

Bei einem Ausführungsbeispiel sind die Steuerventil-Vorrichtungen 11, 12 an jeweils ein Hydraulik-Versorgungssystem A, B angeschlossen und werden von diesem jeweils über die Steuerventil- Zufluss/Rückfluss-Leitung 11a, 12a versorgt. Von jeder Steuerventil-Vorrichtung 11, 12 verläuft eine Hydraulik-Zufluss/Rückfluss-Leitung oder Aktuator- Zufluss/Rückfluss-Leitung 11b bzw. 12b zu dem jeweils zugeordneten Aktuator 1 bzw. 2. Insbesondere verbindet eine erste Aktuator- Zufluss/RückflussLeitung 11 b das erste Steuerventil 11 mit einer ersten Seite des ersten Aktuators 1 und eine zweite Aktuator- Zufluss/Rückfluss-Leitung 12b das zweite Steuerventil 12 mit einer ersten Seite des zweiten Aktuators 2. Das erste Steuerventil 11 ist über eine Aktuator- Zufluss/Rückfluss-Leitung 11c mit einer zweiten Seite oder der Ausgangsseite des ersten Aktuators 1, die in Längsrichtrung des Aktuators von der ersten Seite beabstandet gelegen ist, und das zweite Steuerventil 12 ist über eine Aktuator- Zufluss/Rückfluss-Leitung 12c mit einer zweiten oder der Ausgangsseite des zweiten Aktuators 2, , die in Längsrichtrung des Aktuators von der ersten Seite beabstandet gelegen ist, verbunden. Die Steuerungs- und Überwachungsvorrichtung 10 übermittelt über die funktionale Verbindung Steuerkommandos an die Steuerventile, die daraufhin entsprechend der Steuerkommandos den hydraulischen Zufluss an den jeweils zugeordneten Aktuator und den hydraulischen Rückfluss von dem jeweils zugeordneten Aktuator steuern und dadurch den Aktuator betätigen.

In einem speziellen Ausführungsbeispiel können beide Steuerventile 11, 12 von ein und demselben Hydraulik-Versorgungssystem versorgt sein, so dass auch beide Aktuatoren 1, 2 über dasselbe Hydraulik-Versorgungssystem betätigt werden.

Dabei kann vorgesehen sein, dass an das erste Hydraulik-Versorgungssystem A über eine Zuleitung 13 ein weiteres Hydraulik-Versorgungssystem C angeschlossen ist, das zur Notversorgung bei dem Ausfall des ersten und/oder des zweiten Hydraulik-Versorgungssystems A, B vorgesehen ist. Dabei kann das Gesamt-Hydrauliksystem derart konfiguriert sein, dass das dritte Hydraulik-Versorgungssystem C bereits zugeschaltet wird, wenn bereits eines aus dem ersten oder dem zweiten Hydraulik-Versorgungssystem A, B ausgefallen ist oder dass das dritte Hydraulik-Versorgungssystem C dann zugeschaltet wird, wenn erst beide, d.h. das erste und das zweite Hydraulik-Versorgungssystem A, B ausgefallen ist.

An den Aktuatoren 1, 2 kann jeweils ein Zustands-Sensor S1, S2 angeordnet sein, der jeweils insbesondere eine Position der Schubstangen 7 bzw. 8 im Zylinder 3 bzw. 4, also eine Ausfahrstellung der Schubstangen 7 bzw. 8 erfasst. Die Zustands-Sensoren S1, S2 sind zur Erfassung des Stellzustands des entsprechenden Aktuators 1, 2 vorgesehen und können so gestaltet sein, dass diese weitere Zustandswerte des Aktuators 1, 2 und insbesondere der Schubstange 7, 8 relativ zum Zylinder 3 bzw. 4 und/oder zum tragenden Struktur-Bauteil, an dem diese angeschlossen sind, erfassen kann. Dies kann z.B. die Stell-Position, die Stell-Geschwindigkeit und/oder die Stell-Beschleunigung der Schubstange 7, 8 sein.

Alternativ oder zusätzlich kann auch an den Strukturanschlüssen 7a, 8a der Höhenflosse ein Zustands-Sensor S1, S2 zur Bestimmung des Verstellzustands und z.B. die Verstell-Position, die Verstell-Geschwindigkeit und/oder die Verstell-Beschleunigung desselben angeordnet sein, der jeweils insbesondere eine Position der Schubstangen 7 bzw. 8 im Zylinder 3 bzw. 4, also eine Ausfahrstellung der Schubstangen 7 bzw. 8 erfasst.

Zusätzlich zu dem zuvor beschriebenen Vorsehen eines Zustands-Sensors zur Bestimmung eines Verstell-Zustands des Aktuators oder der Höhenflosse kann jede Steuerventil-Vorrichtung 11, 12 zumindest einen Zustands-Sensor (nicht gezeigt) aufweisen, der ebenfalls über eine Verbindungsleitung (nicht gezeigt) mit der Steuerungs- und Überwachungsvorrichtung 10 funktional verbunden ist. Der Zustands-Sensor erfasst den Steuerzustand des jeweiligen Steuerventils. Der Steuerzustand kann insbesondere die Position oder Stellung und/oder die Geschwindigkeit und/oder die Beschleunigung eines Steuerteils des Steuerventils sein. Zusätzlich kann der erfasste Steuerzustand auch ein Differenzdruck sein, wobei die Steuerungs- und Überwachungsvorrichtung 10 derart eingerichtet ist, das diese mit dessen Werten einen Abgleich von zwei aktiven Aktuatoren 1, 2 vornehmen kann. Die Erfassung oder Messung der Differenzdrücke kann insbesondere über Druckmesser an dem ersten Steuerventil und an dem zweiten Steuerventil erfolgen.

In weiteren Ausführungsbeispielen kann zur Erhöhung der Fehlertoleranz und der System-Ausfallsicherheit des Stellsystems jede Steuerventil-Vorrichtung 11, 12 auch mehrere Zustands-Sensoren aufweisen, die jeweils einen Steuerzustand des jeweiligen Steuerventils erfassen und an die Steuerungs- und Überwachungsvorrichtung 10 übermitteln. Auf diese Weise kann z.B. mit dem Vorsehen einer entsprechenden Vergleichsfunktion die Rekonfigurations-Funktion die Richtigkeit der Zustands-Sensoren prüfen und vorsehen, dass über eine Mehrheitsprüfung in der Minderheit befindlichen Sensoren der Zustand defekt zugeordnet und dessen Werte nicht weiterverwendet werden.

In einem Ausführungsbeispiel der Erfindung wird zur Betätigung der Aktuatoren 1, 2 und somit der Höhenflosse zu einem Zeitpunkt oder in dem jeweils aktuellen Zeitintervall jedes Steuerventil 11, 12 von der Steuerungs- und Überwachungsvorrichtung 10 angesteuert (Aktiv-Aktiv-Schaltung). Dabei ermittelt die Steuerungs- und Überwachungsvorrichtung 10 Kommandosignale an jedes Steuerventil-Vorrichtungen 11, 12. Dadurch, dass durch die Ansteuerung durch die beiden Steuerventil-Vorrichtungen 11, 12 zwei Aktuatoren 1, 2 aktiv betätigt werden, ergibt sich eine Differenz der Stellzustände der beiden aktive Aktuatoren 1, 2 in Bezug auf die Höhenflosse H, so dass die Steuerventil-Vorrichtungen 11, 12 eine mechanische Verspannung der Schubstangen-Anschlussmechanik zwischen den Schubstangen 7 und 8 und der Höhenflosse H bewirken. In einem Ausführungsbeispiel kann die Ansteuerungsfunktion der Steuerungs- und Überwachungsvorrichtung 10 zur Erzeugung von Stell-Kommandos für die Aktuatoren 3, 4 derart vorgesehen sein, dass diese eine vorgegebene Differenz der Stell-Positionen zueinander anstreben, bei der eine gewollte Verspannung der Schubstangen-Anschlussmechanik zwischen den Schubstangen 7 und 8 und der Höhenflosse H bewirkt wird. In einem weiteren Ausführungsbeispiel kann auch in der Steuerungs- und Überwachungsvorrichtung 10 eine Regelung implementiert sein, die die Werte der Zustands-Sensoren S1 bzw. S2 als Eingangswerte verwendet und die Stell-Kommandos für die Aktuatoren 3, 4 derart erzeugt, bei denen die Aktuatoren 3, 4 eine vorgegebene Differenz der Stell-Positionen einnehmen, um eine gewollte Verspannung der Schubstangen-Anschlussmechanik zwischen den Schubstangen 7 und 8 und der Höhenflosse H zu bewirken. In diesen Beispielen kann die Differenz der Stell-Positionen auch abhängig von der Stell-Position der Aktuaoren vorgesehen sein. Auf diese Weise wird ein Lagerspiel bei der Anschluss-Mechanik zwischen den Schubstangen 7, 8 und der Höhenflosse H verhindert. In diesem Ausführungsbeispiel steuern beide Steuerventil-Vorrichtungen 11, 12 den jeweils hydraulisch angeschlossenen Aktuator 1, 2 auf hydraulische Weise aktiv an, d.h. die Steuerzustände des jeweiligen Steuerventils bestimmen zur Steuerung der Betätigungszustände des jeweils angeschlossenen Aktuators 1, 2 den hydraulischen Zufluss zum Aktuator 1, 2 und den hydraulischen Abfluss vom Aktuator 1, 2. Die Steuerungs- und Überwachungsvorrichtung 10 ist derart gestaltet, dass diese Steuerkommandos an die beiden Steuerventil-Vorrichtungen 11, 12 ermittelt und sendet, die somit aktiv die jeweils zugeordneten Aktuatoren 1 bzw. 2 steuert.

In einem anderen Ausführungsbeispiel der Erfindung wird zur Betätigung der Aktuatoren 1, 2 und somit der Höhenflosse H zu einem Zeitpunkt oder in dem jeweils aktuellen Zeitintervall nur eines von beiden Steuerventilen 11, 12 von der Steuerungs- und Überwachungsvorrichtung 10 angesteuert (Aktiv-Passiv-Schaltung). Dabei ermittelt die Steuerungs- und Überwachungsvorrichtung 10 Kommandosignale, die jedoch nur an eines der beiden Steuerventil-Vorrichtungen 11, 12 gesendet wird, die diese Steuerkommandos in entsprechende Steuerzustände umsetzt und auf diese Weise den diesen jeweils angeschlossenen Aktuatoren 1 bzw. 2 steuert und betätigt. Das Steuerventil der jeweils anderen Steuerventil-Vorrichtung 11, 12 ist dabei in einen Passiv-Zustand oder "Durchfluss-Zustand" geschaltet, bei dem das Hydraulik-Öl der beiden Hydraulik-Leitungen 11b, 11 c bzw. 12b, 12c, die das jeweilige Steuerventil 11 bzw. 12 an den jeweils zugeordneten Aktuator 1 bzw. 2 anschließen, durch das Steuerventil fließen können, ohne dass dies von dem Steuerventil wesentlich gesteuert wird. Wenn eine der Steuerventil-Vorrichtungen 11, 12 den jeweils zugeordneten Aktuator 1 bzw. 2 aktiv ansteuert und die andere in einem passiven Zustand gehalten wird, wird die Höhenflosse H durch den von der aktiv geschaltenen Steuerventil-Vorrichtung 11 oder 12 gesteuerten Aktuator betätigt, während die Schubstangen-Kolben-Kombination des jeweils anderen Aktuators 2 bzw. 1 wegen der Passiv-Zustands der zugeordneten Steuerventil-Vorrichtung 12, 11 über die Höhenflosse H mitgeführt wird.

Erfindungsgemäß weist zumindest einer der beiden Aktuatoren 1, 2, in der Darstellung der Figur der Aktuator 1, eine Verriegelungs-Vorrichtung 20 auf. Die Verriegelungs-Vorrichtung 20 weist eine Verriegelungsmechanik auf, mit der die Schubstange 7 des ersten Aktuators 1 und somit der Kolben 5 im Zylinder 3 und/oder an einem tragenden Struktur-Bauteil arretiert werden kann.

In einem Ausführungsbeispiel der Erfindung ist an dem ersten Aktuator 1 gekoppelte Verriegelungs-Vorrichtung 20 mit einer Verriegelungs-Mechanik zur Fixierung der Ausfahrstellung der Schubstange 7 des ersten Aktuators 1 in ihrem verriegeltem Zustand vorgesehen. Die Verriegelungs-Vorrichtung 20 steht hydraulisch mit dem ersten Hydraulik-System A und mit dem zweiten Hydraulik-System B über eine hydraulische Oder-Schaltung derart in Verbindung, dass im normalen Betrieb zumindest eines der Hydraulik-Systeme die Verriegelungs-Mechanik in ihrem entriegeltem Zustand ist und die Verriegelungsmechanik bei dem Abfall beider Hydraulik-Systeme A, B unter einem Mindestdruck die Ausfahrstellung der Schubstange 7 des ersten Aktuators 1 fixiert.

Alternativ oder zusätzlich weist die Verriegelungs-Vorrichtung 20 eine AktivierungsVorrichtung 21, 22 auf, die z.B. mit einer elektrischen oder hydraulischen Leitung 21 a, 22a mit beiden Steuerventilen 11, 12 verbunden sein kann.

Bei einem Ausführungsbeispiel weist die Verriegelungs-Vorrichtung 20 eine Sperrklinke und eine entsprechende Aufnahme für diese auf und ist die Verriegelungs-Vorrichtung 20 derart gestaltet, dass die Sperrklinke in ihrem Ausgangszustand in ihren Verriegelungs-Zustand vorgespannt und in ihrem Entriegelungszustand gehalten ist. Die Verriegelungs-Aktivierungsvorrichtung 21, 22 kann derart gestaltet sein, dass diese auf den Empfang des Aktivierungssignals die Vorspannung der Sperrklinke löst, so dass sich die Sperrklinke in die Verriegelungsstellung zur Arretierung des Aktuators bewegt. Das Aktivierungssignal kann hydraulisch oder elektrisch mittels der Steuerventil-Vorrichtung und/oder der Steuerungs- und Überwachungsvorrichtung 10 zugeführt werden.

In dem Fall einer Kopplung der Rekonfigurations-Funktion der Steuerungs- und Überwachungsvorrichtung 10 mit der Aktivierungsfunktion erzeugt die Steuerungs- und Überwachungsvorrichtung 10 ein Aktivierungssignal, wenn diese beiden Anordnungen aus Aktuator 1 oder 2 und Steuerventil-Vorrichtung 11 bzw. 12 einen Fehler zugeordnet hat, bei dem der Aktuator nicht mehr funktionsfähig ist, d.h. von der Steuerungs- und Überwachungsvorrichtung 10 nicht mehr in vorbestimmter Weise gesteuert werden kann. Die Steuerungs- und Überwachungsvorrichtung 10 erzeugt dann ein Aktivierungssignal und sendet dieses an die Steuerventil-Vorrichtung 11 bzw. 12, die zu der als defekt angesehenen Kombination aus Steuerventil-Vorrichtung und Aktuator gehört. Eine entsprechende Aktivierungsfunktion der betreffenden Steuerventil-Vorrichtung 11 bzw. 12 sendet dieses Aktivierungssignal weiter an die Steuerventil-Vorrichtung 11 bzw. 12. Das Aktivierungssignal ist derart beschaffen, dass mit diesem die Verriegelungsmechanik zur Verriegelung der Schubstange betätigt wird.

Die Verriegelungs-Aktivierungsvorrichtung kann auch direkt mit der Steuerungs- und Überwachungseinrichtung 10 und insbesondere der Rekonfigurations-Funktion der Steuerungs- und Überwachungseinrichtung 10 funktional verbunden sein. In diesem Fall sendet die Steuerungs- und Überwachungseinrichtung 10 direkt das Aktivierungssignal an die Verriegelungsmechanik zur Betätigung der Verriegelung der Schubstange.

Zur Funktionsweise einer Ausführungsform der Erfindung kann die Rekonfigurations-Funktion in der Steuerungs- und Überwachungsvorrichtung 10 derart gestaltet sein, dass diese in vorbestimmten Zeitintervallen einen Soll-Ist-Vergleich zwischen den aktuell an jeden der aktiven Steuerventile jeweils kommandierten Soll-Kommandos und den mittels des Zustands-Sensors S1, S2 zur Erfassung des Stellzustands des entsprechenden Aktuators 1, 2 oder Höhenflosse erfassten Ist-Zuständen vornimmt. Weichen in einem Zeitintervall das Soll-Kommando von dem erfassten Ist-Zustand über ein vorbestimmtes Maß hinaus ab, so erzeugt die Steuerungs- und Überwachungsvorrichtung 10 das Aktivierungssignal je nach Ausführungsbeispiel an die Steuerventil-Vorrichtung 11, 12 oder die Verriegelungs-Aktivierungsvorrichtung 21, 22 zur Betätigung der Verriegelungsmechanik, so dass der Aktuator, dem die Verriegelungs-Vorrichtung 20 zugeordnet ist (in dem gezeigten Ausführungsbeispiel ist dies der Aktuator 1), arretiert wird. Da sowohl der erste Aktuator als auch der zweite Aktuator 2 über die Strukturanschlüsse 7a, 8a an die Höhenflosse H angeschlossen sind, werden dadurch beide Aktuatoren arretiert, so dass somit auch die Höhenflosse H arretiert ist.

Bei einer weiteren Ausführungsform der Erfindung kann weiterhin die Rekonfigurations-Funktion in der Steuerungs- und Überwachungsvorrichtung 10 derart gestaltet sein, dass diese einen Soll-Ist-Vergleich zwischen den aktuell an jeden der aktiven Steuerventile jeweils kommandierten Soll-Kommandos und den mittels des in diesem Fall vorgesehenen Zustands-Sensors des Steuerventils erfassten Ist-Zuständen vornimmt. Falls bei diesem Ausführungsbeispiel die Steuerungs- und Überwachungsvorrichtung 10 an Hand eines Soll-Ist-Vergleichs von kommandierten Soll-Werten und den jeweils an den Steuerventilen erfassten Ist-Zuständen und bei Überschreiten eines vorbestimmten Differenzwertes den Ausfall eines Steuerventils ermittelt, wird dieses Steuerventil abgeschaltet oder in der Rekonfigurations-Funktion der Zustand "defekt" zugeordnet. Falls das defekte Steuerventil oder eines der defekten Steuerventile das jeweils aktive Steuerventil ist, wird die Ansteuerung des Aktuators von dem zuvor aktiven Steuerventil auf ein anderes Steuerventil umgeschaltet, das dann den Aktuator aktiv ansteuert. Die Rekonfigurations-Funktion ist derart ausgeführt, dass diese nur auf ein Steuerventil umschaltet, der nicht der Zustand "defekt" zugeordnet ist.

Zu Erhöhung der Fehlertoleranz und der System-Ausfallsicherheit des Stellsystems können in Varianten des Ausführungsbeispiels, bei dem jedem Aktuator je ein Steuerventil zugeordnet ist, einem Aktuator auch eine Gruppe von Steuerventilen zugeordnet sein. Bei diesem Ausführungsbeispiel ist an jedem Steuerventil zumindest ein Zustandsensor vorgesehen. Eine Gruppe von Steuerventilen kann insbesondere zwei, drei oder auch vier Steuerventile aufweisen, wobei jedes Steuerventil über jeweils eine Aktuator-Zuleitung und jeweils eine Aktuator-Rückflussleitung an den jeweiligen Aktuator angeschlossen ist. In diesem Fall ist jedes Steuerventil der Gruppe von Steuerventilen an einem Hydraulik-Versorgungssystem A, B angeschlossen und wird von der Steuerungs- und Überwachungsvorrichtung 10 über jeweils eine funktionale Verbindung angesteuert und überwacht. Dabei ist jedoch nur eines der Steuerventile über dessen Aktuator-Zuleitung und jeweils eine Aktuator-Rückflussleitung an den jeweiligen Aktuator hydraulisch angeschlossen, von denen jedoch nur ein Steuerventil den Aktuator aktiv ansteuert, d.h. dessen Steuerzustände hydraulisch mit dem Aktuator zur Bestimmung von dessen Betätigungszuständen verbunden ist. In diesem Ausführungsbeispiel ist also nur jeweils ein Steuerventil der einem Aktuator zugeordneten Gruppe von Steuerventilen aktiv, d.h. dieses eine Steuerventil steuert den jeweils zugeordneten Aktuator. Weiterhin kann eine Rekonfigurations-Funktion in der Steuerungs- und Überwachungsvorrichtung 10 angeordnet sein, die sämtlichen Steuerventilen einer Gruppe von Steuerventilen dasselbe Soll-Kommando zur Kommandierung der Zustände der Steuerventile sendet und die aktuellen oder Ist-Zustände des jeweils aktiven und der weiteren nicht-aktiven Steuerventile mittels der Zustands-Sensoren überwacht. Falls die Steuerungs- und Überwachungsvorrichtung 10 an Hand eines Soll-Ist-Vergleichs von kommandierten Soll-Werten und den jeweils an den Servoventilen erfassten Ist-Zuständen und bei Überschreiten eines vorbestimmten Differenzwertes den Ausfall eines Steuerventils ermittelt, wird diese Steuerventil abgeschaltet oder in der Rekonfigurations-Funktion der Zustand "defekt" zugeordnet. Falls das defekte Steuerventil oder eines der defekten Steuerventile das jeweils aktive Steuerventil ist, wird die Ansteuerung des Aktuators von dem zuvor aktiven Steuerventil auf ein anderes Steuerventil umgeschaltet, das dann den Aktuator aktiv ansteuert. Die Rekonfigurations-Funktion ist derart ausgeführt, dass diese nur auf ein Steuerventil umschaltet, dem nicht der Zustand "defekt" zugeordnet ist.

Weiterhin kann die Steuerungs- und Überwachungseinrichtung 10 eine Rekonfigurations-Funktion aufweisen, die Signale von den Hydraulik-Versorgungssystemen A, B empfängt, und die an Hand der Signale feststellen kann, ob die Hydraulik-Versorgungssysteme A, B beide intakt sind. Dies kann insbesondere durch Drucksensoren erfolgen, mit denen die in den Hydraulik-Versorgungssystemen A, B auftretende Hydraulikdrücke erfasst werden und an die Steuerungs- und Überwachungsvorrichtung 10 übermittelt werden kann. Stellt die Steuerungs- und Überwachungsvorrichtung 10 fest, dass beide Hydraulik-Versorgungssystem A, B nicht funktionsfähig sind, also z.B. die Hydraulikdrücke in den Hydraulik-Versorgungssystem A, B unter einen unteren Grenzwert fallen, generiert die Steuerungs- und Überwachungsvorrichtung 10 das genannte Aktivierungssignal und sendet dieses je nach Ausführungsbeispiel an die Steuerventil-Vorrichtung 11, 12 oder die Verriegelungs-Aktivierungsvorrichtung 21, 22 zur Betätigung der Verriegelungsmechanik, so dass der Aktuator, dem die Verriegelungs-Vorrichtung 20 zugeordnet ist, arretiert wird.

Generell kann die Rekonfigurations-Funktion, die vorangehend als Teil der Steuerungs- und Überwachungsvorrichtung 10 beschrieben worden ist, alternativ auch in der Steuerventil-Vorrichtung 11, 12 und insbesondere in der Steuerfunktion derselben integriert sein.

Erfindungsgemäß ist weiterhin ein Verfahren zum Testen der erfindungsgemäßen Stellsystem nach einer der voranstehenden Ausführungsformen vorgesehen, bei dem durch das automatisierte Abfahren einer festgelegten Testroutine oder einem Testverfahren die Integrität des kompletten Lastpfades des Stellsystems und insbesondere die Funktionsfähigkeit der Verriegelungs-Vorrichtung 20 nachgewiesen wird. Das erfindungsgemäße Stellsystem ermöglicht es, mit der geeigneten Testroutine schlafende Fehler zu verweiden. Ein solches Testverfahren kann als Testfunktion in der Steuerungs- und Überwachungsvorrichtung 10 integriert sein kann und weist die Schritte auf:
■ Aufnahme der Messwerte der Zustands-Sensoren S1, S2 zur Erfassung einer ersten oder Anfangs-Verstellposition der Höhenflosse H,
■ Aktivierung der Verriegelungs-Vorrichtung 20 zur Blockierung des ersten Aktuators 1,
■ Betätigung des zweiten Aktuators 2 in zumindest eine vorgegebene Richtung,
■ nach der Betätigung des zweiten Aktuators 2 Aufnahme der Messwerte der Zustands-Sensoren S1, S2 zur Erfassung einer zweiten oder End-Verstellposition und
■ Vergleich der ersten Verstellposition mit den zweiten Verstellposition und Erzeugung eines Fehlersignals, wenn die Differenz zwischen der ersten Verstellposition und der zweiten Verstellposition einen vorgegebenen Grenzwert überschreitet.

Bei dem Vorliegen eines solchen Fehlersignals, das insbesondere bei einem Defekt der Verriegelungs-Vorrichtung 20 erzeugt wird, kann vorgesehen sein, dass die Steuerungs- und Überwachungsvorrichtung 10 die Aktuatoren nicht mehr betätigt.

Das Testverfahren kann weiterhin vorsehen, den zweiten Aktuator 2 in einer weiteren Richtung zu betätigen, die entgegen gesetzt zu der Betätigungsrichtung der in einem der vorangegangenen Schritte durchgeführten Betätigung gerichtet ist.

Zur Kommandierung der Verriegelungs-Vorrichtung 20 können die zu den beschriebenen Ausführungsformen der Erfindung genannten Funktionen wie z.B. die Aktivierungsfunktion vorgesehen sein.

## Patentansprüche

1. Stellsystem für eine hydraulisch betätigbare Höhenflosse eines Flugzeugs, aufweisend:
■ zwei von zumindest einem Hydraulik-Versorgungssystem (A, B) versorgte Aktuatoren (1, 2), von denen jeder an ein tragendes Struktur-Bauteil (M) und an eine gegenüber dem tragenden Struktur-Bauteil (M) verstellbare Höhenflosse (H) zur Betätigung derselben gekoppelt ist,
■ eine zur Steuerung des ersten Aktuators (1) an diesen hydraulisch angeschlossene erste Steuerventil-Vorrichtung (11) und eine zur Steuerung des zweiten Aktuators (2) an diesen hydraulisch angeschlossene zweite Steuerventil-Vorrichtung (12), die jeweils von einem Hydraulik-System (A, B) versorgt werden,
■ eine mit den Steuerventil-Vorrichtungen (11, 12) funktional verbundene Steuerungs- und Überwachungsvorrichtung (10), die entsprechende Kommandosignale für die Steuerventil-Vorrichtungen (11, 12) ermittelt und an diese zur Ausführung entsprechender Steuerbewegungen zur Betätigung der Aktuatoren (1, 2) sendet,
**gekennzeichnet durch**:
eine an den ersten Aktuator (1) gekoppelte Verriegelungs-Vorrichtung (20) mit einer Verriegelungs-Mechanik zur Fixierung der Ausfahrstellung der Schubstange (7) des ersten Aktuators (1) in ihrem verriegeltem Zustand, die hydraulisch mit dem ersten Hydraulik-System (A) und mit dem zweiten Hydraulik-System (B) über eine hydraulische Oder-Schaltung derart in Verbindung steht, dass im normalen Betrieb zumindest eines der Hydraulik-Systeme die Verriegelungs-Mechanik in ihrem entriegeltem Zustand ist und die Verriegelungsmechanik bei dem Abfall beider Hydraulik-Systeme (A, B) unter einem Mindestdruck die Ausfahrstellung der Schubstange (7) des ersten Aktuators (1) fixiert.

2. Stellsystem für eine hydraulisch betätigbare Höhenflosse nach dem Anspruch 1, **dadurch gekennzeichnet, dass** das Stellsystem weiterhin aufweist: mit der Steuerungs- und Überwachungsvorrichtung (10) funktional in Verbindung stehende Zustands-Sensoren (S1, S2) zur Bestimmung des Verstellzustands von Strukturanschlüssen (7a, 8a) der Aktuatoren (1, 2) an der Höhenflosse (H) oder von Bereichen, die an den Strukturanschlüssen (7a, 8a) gelegen sind,
wobei die an den ersten Aktuator (1) gekoppelte Verriegelungs-Vorrichtung (20) weiterhin eine Verriegelungs-Aktivierungsvorrichtung (21, 22) aufweist, die funktional mit der Steuerungs- und Überwachungsvorrichtung (10) in Verbindung steht und die eine Verriegelungs-Aktivierungsvorrichtung (21, 22) aufweist, die auf den Empfang eines Aktivierungssignals die Verriegelungsmechanik aktiviert,
wobei die Steuerungs- und Überwachungsvorrichtung (10) eine Rekonfigurations-Funktion aufweist, die aufgrund der Erkennung eines Fehlerzustands im Stellsystem ein Aktivierungssignal an die Verriegelungs-Aktivierungsvorrichtung (21, 22) zur Fixierung der Ausfahrstellung der Schubstange (7) des ersten Aktuators (1) sendet, wenn die erfassten Verstellzustände an beiden Strukturanschlüssen (7a, 8a) über ein vorbestimmtes Maß von den jeweiligen Soll-Kommandos der Steuerungs- und Überwachungsvorrichtung (10) abweicht.

3. Stellsystem für eine hydraulisch betätigbare Höhenflosse nach dem Anspruch 2, **dadurch gekennzeichnet, dass** die Steuerungs- und Überwachungsvorrichtung (10) zur Erkennung eines Fehlerzustands im Stellsystem eine Rekonfigurations-Funktion aufweist, die eine Vergleichsfunktion aufweist, mit der Soll-Kommandos der Steuerungs- und Überwachungsvorrichtung (10) mit den von den Zustands-Sensoren (S1, S2) erfassten Verstellzuständen an beiden Strukturanschlüssen (7a, 8a) der Aktuatoren (1, 2) verglichen werden, und die ein Aktivierungssignal an die Verriegelungs-Aktivierungsvorrichtung (21, 22) zur Fixierung der Ausfahrstellung der Schubstange (7) des ersten Aktuators (1) sendet, wenn die erfassten Verstellzustände an beiden Strukturanschlüssen (7a, 8a) über ein vorbestimmtes Maß von den jeweiligen Soll-Kommandos der Steuerungs- und Überwachungsvorrichtung (10) abweicht.

4. Stellsystem für eine hydraulisch betätigbare Höhenflosse nach dem Anspruch 2 oder 3, **dadurch gekennzeichnet, dass** die Steuerungs- und Überwachungsvorrichtung (10) zur Fixierung der Ausfahrstellung der Schubstange (7) des ersten Aktuators (1) das Aktivierungssignal an die erste Steuerventil-Vorrichtung (11) sendet, die ein Aktivierungssignal an die Verriegelungs-Aktivierungsvorrichtung (21, 22) sendet.

5. Stellsystem für eine hydraulisch betätigbare Höhenflosse nach einem der voranstehenden Ansprüche 2 bis 4, **dadurch gekennzeichnet, dass** in dem Fall, in dem die an einem der beiden Strukturanschlüsse (7a, 8a) erfassten Verstellzustände ein vorbestimmtes Maß von den jeweiligen Soll-Kommandos der Steuerungs- und Überwachungsvorrichtung (10) für die jeweils zugeordnete Steuerventil-Vorrichtung (11, 12) abweicht, die Steuerungs- und Überwachungsvorrichtung (10) die jeweils zugeordnete Steuerventil-Vorrichtung (11, 12) auf Durchfluss schaltet, so dass der jeweils zugeordnete Aktuator (1, 2) von dem jeweils anderen Aktuator (2, 1) mitgeführt wird.

6. Stellsystem für eine hydraulisch betätigbare Höhenflosse nach einem der voranstehenden Ansprüche 2 bis 5, **dadurch gekennzeichnet, dass** die Zustands-Sensoren (S1, S2) zur Bestimmung des Verstellzustands von Strukturanschlüssen (7a, 8a) der Aktuatoren (1, 2) jeweils an den Aktuatoren (1, 2) angeordnet sind und eine Ausfahrstellung der Schubstangen (7, 8) erfassen.

7. Stellsystem für eine hydraulisch betätigbare Höhenflosse nach einem der voranstehenden Ansprüche 2 bis 6, **dadurch gekennzeichnet, dass** die Zustands-Sensoren (S1, S2) zur Bestimmung des Verstellzustands von Aktuatoren (1, 2) jeweils an den Strukturanschlüssen (7a, 8) der Aktuatoren (1, 2) angeordnet sind und eine Ausfahrstellung von deren Anschlussbereichen an der Höhenflosse (H) erfassen.

8. Stellsystem für eine hydraulisch betätigbare Höhenflosse nach dem Anspruch 6 oder 7, **dadurch gekennzeichnet, dass** die die Zustands-Sensoren (S1, S2) zur Bestimmung des Verstellzustands von Strukturanschlüssen (7a, 8a) der Aktuatoren (1, 2) zusätzlich die Stell-Geschwindigkeit und/oder die Stell-Beschleunigung der Schubstangen (7, 8) erfassen.

9. Stellsystem für eine hydraulisch betätigbare Höhenflosse nach einem der voranstehenden Ansprüche 2 bis 8, **dadurch gekennzeichnet, dass** jede der Steuerventil-Vorrichtungen (11, 12) an jeweils ein Hydraulik-Versorgungssystem (A, B) angeschlossen ist und dass in dem Fall, dass einem der Hydraulik-Versorgungssysteme (A, B) ein Fehlerzustand zugeordnet worden ist, die Steuerungs- und Überwachungsvorrichtung (10) die jeweils zugeordnete Steuerventil-Vorrichtung (11, 12) auf Durchfluss schaltet, so dass der jeweils zugeordnete Aktuator (1, 2) von dem jeweils anderen Aktuator (2, 1) mitgeführt wird.

10. Stellsystem für eine hydraulisch betätigbare Höhenflosse nach dem Anspruch 9, **dadurch gekennzeichnet, dass** in dem Fall, dass beiden der Hydraulik-Versorgungssysteme (A, B) ein Fehlerzustand zugeordnet worden ist, die Steuerungs- und Überwachungsvorrichtung (10) ein Aktivierungssignal an die Verriegelungs-Aktivierungsvorrichtung (21, 22) sendet.

11. Testverfahren zur Überprüfung der Integrität eines Stellsystems zur Betätigung einer Höhenflosse eines Flugzeugs mit zwei Aktuatoren (1, 2), die jeweils von einer Steuerventil-Vorrichtung (11, 12) angesteuert werden, eine mit den Steuerventil-Vorrichtungen (11, 12) funktional verbundene Steuerungs- und Überwachungsvorrichtung (10), die entsprechende Kommandosignale für die Steuerventil-Vorrichtungen (11, 12) ermittelt und an diese zur Ausführung entsprechender Steuerbewegungen zur Betätigung der Aktuatoren (1, 2) sendet, und eine an den ersten Aktuator (1) gekoppelte Verriegelungs-Vorrichtung (20) mit einer Verriegelungs-Mechanik zur Fixierung der Ausfahrstellung der Schubstange (7) des ersten Aktuators (1) in ihrem verriegeltem Zustand, mit den Schritten:
■ Aufnahme der Messwerte der Zustands-Sensoren (S1, S2) zur Erfassung einer ersten Verstellposition der Höhenflosse (H),
■ Aktivierung der Verriegelungs-Vorrichtung (20) zur Blockierung des ersten Aktuators (1),
■ Betätigung des zweiten Aktuators (2) in zumindest eine vorgegebene Richtung,
■ nach der Betätigung des zweiten Aktuators (2) Aufnahme der Messwerte der Zustands-Sensoren (S1, S2) zur Erfassung einer zweiten Verstellposition und
■ Vergleich der ersten Verstellposition mit den zweiten Verstellposition und Erzeugung eines Fehlersignals, wenn die Differenz zwischen der ersten Verstellposition mit den zweiten Verstellposition einen vorgegebenen Grenzwert überschreiten.

## Claims

1. An adjustment system for a hydraulically operable aircraft elevator, having:
■ two actuators (1, 2), supplied from at least one hydraulic supply system (A, B), of which each is coupled to a load-bearing structural component (M), and to an elevator (H) displaceable relative to the load-bearing structural component (M), for the operation of the elevator,
■ a first control valve device (11), hydraulically connected to the first actuator (1) to control the latter, and a second control valve device (12), hydraulically connected to the second actuator (2) to control the latter, which devices are respectively supplied from a hydraulic system (A, B),
■ a control and monitoring unit (10) functionally connected with the control valve devices (11, 12), which determines appropriate command signals for the control valve devices (11, 12), and transmits the signals to the latter to execute appropriate control movements for the operation of the actuators (1, 2),
**characterized by**
■ a locking device (20) coupled to the first actuator (1) with a locking mechanism to secure the extended position of the pushrod (7) of the first actuator (1) in its locked state, which is hydraulically connected with the first hydraulic system (A) and with the second hydraulic system (B) via an hydraulic OR-circuit such that in normal operation of at least one of the hydraulic systems the locking mechanism is in its unlocked state, and such that in the event of the failure of both hydraulic systems (A, B) the locking mechanism under a minimum pressure secures the extended position of the pushrod (7) of the first actuator (1).

2. The adjustment system for a hydraulically operable elevator in accordance with claim 1, **characterised in that** the actuation system furthermore has: state sensors (S1, S2) functionally connected with the control and monitoring unit (10) to determine the displacement state of structural joints (7a, 8a) connecting the actuators (1, 2) to the elevator (H), or of regions that are located at the structural joints (7a, 8a),
wherein the locking device (20) coupled to the first actuator (1) furthermore has a lock activation device (21, 22), which is functionally connected with the control and monitoring unit (10) and which has a lock activation device (21, 22), which upon the receipt of an activation signal activates the locking mechanism,
wherein the control and monitoring unit (10) has a reconfiguration function, which on the basis of the detection of a fault state in the actuation system transmits an activation signal to the lock activation device (21, 22) to secure the extended position of the pushrod (7) of the first actuator (1) if the displacement states detected on both structural joints (7a, 8a) deviate by a predetermined measure from the respective REQUIRED-commands of the control and monitoring unit (10).

3. The adjustment system for a hydraulically operable elevator in accordance with claim 2, **characterised in that** the control and monitoring unit (10) has a reconfiguration function with a comparison function for the detection of a fault state in the actuation system, with which REQUIRED-commands of the control and monitoring unit (10) are compared with the displacement states detected by the state sensors (S1, S2) on both structural joints (7a, 8a) of the actuators (1, 2), and which transmits an activation signal to the lock activation device (21, 22) to secure the extended position of the pushrod (7) of the first actuator (1), if the displacement states captured on both structural joints (7a, 8a) deviate by a predetermined measure from the respective REQUIRED-commands of the control and monitoring unit (10).

4. The adjustment system for a hydraulically operable elevator in accordance with claim 2 or 3, **characterised in that** the control and monitoring unit (10) to secure the extended position of the pushrod (7) of the first actuator (1) transmits the activation signal to the first control valve device (11), which transmits an activation signal to the lock activation device (21, 22).

5. The adjustment system for a hydraulically operable elevator in accordance with one of the preceding claims 2 to 4, **characterised in that** in the case in which the displacement state detected on one of the two structural joints (7a, 8a) deviates by a predetermined measure from the respective REQUIRED-command of the control and monitoring unit (10) for the respectively associated control valve device (11, 12), the control and monitoring unit (10) switches the respectively associated control valve device (11, 12) to through flow, so that the respectively associated actuator (1, 2) is carried along with the respectively other actuator (2, 1).

6. The adjustment system for a hydraulically operable elevator in accordance with one of the preceding claims 2 to 5, **characterised in that** the state sensors (S1, S2)) to determine the displacement state of structural joints (7a, 8a) of the actuators (1, 2) are respectively arranged on the actuators (1, 2) and detect an extended position of the pushrods (7, 8).

7. The adjustment system for a hydraulically operable elevator in accordance with one of the preceding claims 2 to 6, **characterised in that** the state sensors (S1, S2) to determine the displacement state of actuators (1, 2) are respectively arranged on the structural joints (7a, 8) of the actuators (1, 2) and detect an extended position of their regions connecting to the elevator (H).

8. The adjustment system for a hydraulically operable elevator in accordance with claim 6 or 7, **characterised in that** the state sensors (S1, S2)) to determine the displacement state of structural joints (7a, 8a) of the actuators (1, 2) in addition capture the actuation velocity and/or the actuation acceleration of the pushrods (7, 8).

9. The adjustment system for a hydraulically operable elevator in accordance with one of the preceding claims 2 to 8, **characterised in that** each of the control valve devices (11, 12) is respectively connected to an hydraulic supply system (A, B), and **in that** in the event that a fault state has been associated with one of the hydraulic supply systems (A, B), the control and monitoring unit (10) switches the respectively associated control valve device (11, 12) to through flow, so that the respectively associated actuator (1, 2) is carried along with the respectively other actuator (2, 1).

10. The adjustment system for a hydraulically operable elevator in accordance with claim 9, **characterised in that** in the event that a fault state has been associated with both of the hydraulic supply systems (A, B), the control and monitoring unit (10) transmits an activation signal to the lock activation device (21, 22).

11. A test method to check the integrity of an adjustment system for the operation of an aircraft elevator with two actuators (1, 2), which in each case are actuated by a control valve device (11, 12), a control and monitoring unit (10) functionally connected with the control valve devices (11, 12), which determines appropriate command signals for the control valve devices (11, 12), and transmits the signals to the latter for the execution of appropriate control movements for the operation of the actuators (1, 2), and a locking device (20) coupled to the first actuator (1) with a locking mechanism to secure the extended position of the pushrod (7) of the first actuator (1) in its locked state, with the steps:
■ receiving the measured values of the state sensors (S1, S2) to determine a first displacement position of the elevator (H),
■ activation of the locking device (20) to block the first actuator (1),
■ operation of the second actuator (2) in at least one prescribed direction,
■ after operation of the second actuator (2), receiving the measured values of the state sensors (S1, S2) to determine a second displacement position, and
■ comparison of the first displacement position with the second displacement position and generation of a fault signal if the difference between the first displacement position and the second displacement position exceeds a prescribed limit.

## Revendications

1. Système de réglage pour un stabilisateur horizontal actionnable hydrauliquement d'un avion, présentant :
- deux actionneurs (1, 2) alimentés par au moins un système d'alimentation hydraulique (A, B) desquels chacun est couplé à une pièce structurelle porteuse (M) et à un stabilisateur horizontal (H) pouvant être réglé par rapport à la pièce structurelle porteuse (M) pour actionner celle-ci,
- un premier dispositif de soupape de commande (11) raccordé hydrauliquement au premier actionneur (1) pour commander celui-ci, et un second dispositif de soupape de commande (12) raccordé hydrauliquement au second actionneur (2) pour commander celui-ci, lesquels sont respectivement alimentés par un système d'alimentation hydraulique (A, B),
- un dispositif de commande et de surveillance (10) en liaison fonctionnelle avec les dispositifs de soupape de commande (11, 12) qui établit des signaux de commande correspondants pour les dispositifs de soupape de commande (11, 12) et les envoie à ceux-ci pour exécuter des mouvements de commande correspondants pour actionner les actionneurs (1, 2),
**caractérisé par** un dispositif de verrouillage (20) couplé au premier actionneur (1), comprenant une mécanique de verrouillage pour fixer la position de sortie de la bielle (7) du premier actionneur (1) dans son état verrouillé, lequel est en liaison hydraulique avec les premier (A) et second (B) systèmes d'hydraulique via un circuit « OU » hydraulique, de telle sorte qu'en fonctionnement normal, au moins un des systèmes d'hydraulique est la mécanique de verrouillage dans son état déverrouillé et la mécanique de verrouillage, lorsque les deux systèmes d'hydraulique (A, B) ne fonctionnent pas, fixe la position de sortie de la bielle (7) du premier actionneur (1) sous une pression minimale.

2. Système de réglage pour un stabilisateur horizontal actionnable hydrauliquement selon la revendication 1, **caractérisé en ce que** le système de réglage présente en outre : des capteurs d'état (S1, S2) en liaison fonctionnelle avec le dispositif de commande et de surveillance (10) pour déterminer l'état de réglage de raccords structurels (7a, 8a) des actionneurs (1, 2) sur le stabilisateur horizontal (H) ou de zones qui sont placées sur les raccords structurels (7a, 8a),
sachant que le dispositif de verrouillage (20) couplé au premier actionneur (1) présente en outre un dispositif d'activation de verrouillage (21, 22) qui est en liaison fonctionnelle avec le dispositif de commande et de surveillance (10) et présente un dispositif d'activation de verrouillage (21, 22) qui active le mécanisme de verrouillage à la réception d'un signal d'activation,
sachant que le dispositif de commande et de surveillance (10) présente une fonction de reconfiguration qui en raison de la détection d'un état d'erreur dans le système de réglage, envoie un signal d'activation au dispositif d'activation de verrouillage (21, 22) pour fixer la position de sortie de la bielle (7) du premier actionneur (1), lorsque les états de réglage détectés sur les deux raccords structurels (7a, 8a) s'écartent d'une dimension prédéfinie des commandes nominales respectives du dispositif de commande et de surveillance (10).

3. Système de réglage pour un stabilisateur horizontal actionnable hydrauliquement selon la revendication 2, **caractérisé en ce que** le dispositif de commande et de surveillance (10) présente une fonction de reconfiguration pour détecter un état d'erreur dans le système de réglage, laquelle présente une fonction de comparaison avec laquelle des commandes nominales du dispositif de commande et de surveillance (10) sont comparées aux états de réglage sur les deux raccords structurels (7a, 8a) des actionneurs (1, 2) détectés par les capteurs d'état (S1, S2) et qui envoie un signal d'activation au dispositif d'activation de verrouillage (21, 22) pour fixer la position de sortie de la bielle (7) du premier actionneur (1), lorsque les états de réglage détectés sur les deux raccords structurels (7a, 8a) s'écartent d'une dimension prédéfinie des commandes nominales respectives du dispositif de commande et de surveillance (10).

4. Système de réglage pour un stabilisateur horizontal actionnable hydrauliquement selon la revendication 2 ou 3, **caractérisé en ce que** le dispositif de commande et de surveillance (10) envoie le signal d'activation pour fixer la position de sortie de la bielle (7) du premier actionneur (1) au premier dispositif de soupape de commande (11), lequel envoie un signal d'activation au dispositif d'activation de verrouillage (21, 22).

5. Système de réglage pour un stabilisateur horizontal actionnable hydrauliquement selon l'une des revendications précédentes 2 à 4, **caractérisé en ce qu'**au cas où les états d'erreur détectés sur les sur les deux raccords structurels (7a, 8a) s'écartent d'une dimension prédéfinie des commandes nominales respectives du dispositif de commande et de surveillance (10) pour le dispositif de soupape de commande (11, 12) respectif attribué, le dispositif de commande et de surveillance (10) met le dispositif de soupape de commande (11, 12) respectif attribué en débit, de façon à ce que l'actionneur (1, 2) respectif attribué soit entraîné par l'autre actionneur (2, 1) respectif.

6. Système de réglage pour un stabilisateur horizontal actionnable hydrauliquement selon l'une des revendications précédentes 2 à 5, **caractérisé en ce que** les capteurs d'état (S1, S2) pour déterminer l'état de réglage de raccords structurels (7a, 8a) des actionneurs (1, 2) sont disposés respectivement sur les actionneurs (1, 2) et détectent une position de sortie des bielles (7, 8).

7. Système de réglage pour un stabilisateur horizontal actionnable hydrauliquement selon l'une des revendications précédentes 2 à 6, **caractérisé en ce que** les capteurs d'état (S1, S2) sont disposés respectivement sur les raccords structurels (7a, 8a) des actionneurs (1, 2) et détectent une position de sortie de leurs zones de raccordement sur le stabilisateur horizontal (H).

8. Système de réglage pour un stabilisateur horizontal actionnable hydrauliquement selon la revendication 6 ou 7, **caractérisé en ce que** les capteurs d'état (S1, S2) pour déterminer l'état de réglage de raccords structurels (7a, 8a) des actionneurs (1, 2) détectent en plus la vitesse de réglage et/ou l'accélération de réglage des bielles (7, 8).

9. Système de réglage pour un stabilisateur horizontal actionnable hydrauliquement selon l'une des revendications précédentes 2 à 8, **caractérisé en ce que** chacun des dispositifs de soupape de commande (11, 12) est raccordé sur respectivement un système d'alimentation hydraulique (A, B) et qu'au cas où un état d'erreur est attribué à l'un des systèmes d'alimentation hydraulique (A, B), le dispositif de commande et de surveillance (10) met le dispositif de soupape de commande (11, 12) respectif attribué en débit, de façon à ce que l'actionneur (1, 2) respectif attribué soit entraîné par l'autre actionneur (2, 1) respectif.

10. Système de réglage pour un stabilisateur horizontal actionnable hydrauliquement selon la revendication 9, **caractérisé en ce qu'**au cas où un état d'erreur est attribué aux deux systèmes d'alimentation hydraulique (A, B), le dispositif de commande et de surveillance (10) envoie un signal d'activation au dispositif d'activation de verrouillage (21, 22).

11. Procédé de test pour vérifier l'intégrité d'un système de réglage pour actionner un stabilisateur horizontal d'un avion, comprenant deux actionneurs (1, 2) commandés chacun par un dispositif de soupape de commande (11, 12), un dispositif de commande et de surveillance (10) en liaison fonctionnelle avec les dispositifs de soupape de commande (11, 12) qui établit des signaux de commande correspondants pour les dispositifs de soupape de commande (11, 12) et les envoie à ceux-ci pour exécuter des mouvements de commande correspondants pour actionner les actionneurs (1, 2), et un dispositif de verrouillage (20) couplé au premier actionneur (1), comprenant une mécanique de verrouillage pour fixer la position de sortie de la bielle (7) du premier actionneur (1) dans son état verrouillé, comprenant les étapes :
- de réception des valeurs de mesure des capteurs d'état (S1, S2) pour détecter une première position de réglage du stabilisateur horizontal (H),
- d'activation du dispositif de verrouillage (20) pour bloquer le premier actionneur (1),
- d'actionnement du deuxième actionneur (2) dans au moins une direction prédéfinie,
- après l'actionnement du deuxième actionneur (2), de réception des valeurs de mesure des capteurs d'état (S1, S2) pour détecter une seconde position de réglage et
- de comparaison de la première position de réglage avec la deuxième position de réglage et de production d'un signal d'erreur lorsque la différence entre la première position de réglage et la deuxième position de réglage dépasse une valeur-limite prédéfinie.
